# FASCICULE DE BREVET EUROPEEN

(11) **EP 4 211 010 B1**
(45) Date de publication et mention de la délivrance du brevet: **23.10.2024**
(21) Numéro de dépôt: 21770169.7
(22) Date de dépôt: 27.08.2021
(51) Int. Cl.: B60W 30/18, B60W 50/14, G08G 1/0967, G08G 1/0962, B60W 60/00, B60W 50/00

(54) **PROCÉDÉ D'AFFICHAGE SÉCURISÉ D'INFORMATIONS DANS UN VÉHICULE**
VERFAHREN ZUR SICHEREN ANZEIGE VON INFORMATIONEN IN EINEM FAHRZEUG
METHOD FOR SECURE DISPLAY OF INFORMATION IN A VEHICLE

(30) Priorité: 09.09.2020 FR 2009132
(43) Date de publication de la demande: 19.07.2023
(73) Titulaire: Ampere SAS, 92100 Boulogne-Billancourt (FR); NISSAN MOTOR CO., LTD., Kanagawa 221-0023 (JP)
(72) Inventeur: GACOIN, Nicolas, 27940 AUBEVOYE (FR); KUNC, Jérôme, 27940 AUBEVOYE (FR)
(74) Mandataire: Renault Group
(86) Numéro de dépôt international: PCT/EP2021/073767
(87) Numéro de publication internationale: WO 2022/053338

(56) Documents cités:
- EP-A1- 3 575 175
- DE-T5- 112016 005 784
- US-A1- 2013 110 315

## Description

L'invention concerne un procédé d'affichage sécurisé d'informations dans un véhicule. L'invention porte encore sur un système d'assistance à la conduite d'un véhicule et sur un véhicule comprenant un tel système d'assistance. L'invention porte également sur un programme d'ordinateur mettant en oeuvre le procédé mentionné.

Les technologies d'assistance à la conduite sont de plus en plus répandues et ne sont plus limitées aux véhicules haut de gamme. Les documents US 2013/0110315 A1, EP 3575175 A1 et DE 112016005784 T5 divulguent des systèmes d'aide à la conduite. Ces technologies permettent de simplifier la conduite des véhicules automobiles et/ou de fiabiliser les comportements des conducteurs desdits véhicules. En particulier, les systèmes d'assistance à la conduite améliorent le confort et la sécurité des usagers en régulant généralement la vitesse du véhicule. C'est notamment le cas de procédés et systèmes d'assistance tels que les systèmes de recommandation d'une vitesse longitudinale optimale en fonction des feux de signalisation, également connus sous l'acronyme « GLOSA » de l'anglais « green light optimal speed advisory », ou des régulateurs de vitesse adaptatifs de type « ACC », de l'anglais « Adaptative Cruise Control ».

De tels systèmes comprennent classiquement des systèmes d'interface comprenant des modules d'affichage de type écrans diffusant les informations relatives à des évènements de conduite en temps réel et/ou à venir. De tels modules d'affichage peuvent néanmoins provoquer un état de baisse de vigilance du conducteur en détournant son attention de la voie de circulation et en provoquant ainsi un comportement anormal susceptible d'engendrer un accident.

L'invention s'inscrit dans ce contexte et vise à fournir un procédé d'affichage sécurisé d'informations dans un véhicule automobile et un système d'assistance à la conduite apte à mettre en oeuvre un tel procédé.

L'invention propose un procédé d'affichage sécurisé d'informations dans un véhicule équipé d'un système d'assistance à la conduite, le procédé comprenant les étapes suivantes :
- une étape de détection d'un élément d'infrastructure, notamment un feu de signalisation connecté, susceptible de présenter une pluralité de statuts ;
- une étape de transmission de données, relatives à l'élément d'infrastructure, au véhicule et d'affichage d'informations relatives à des évènements de conduite sur un module d'affichage d'un système d'assistance à la conduite en fonction desdites données transmises ;
- une étape de localisation du véhicule relativement à l'élément d'infrastructure ;
- une étape d'estimation, en temps réel, d'un temps restant Tᵢ au véhicule pour atteindre l'élément d'infrastructure prenant en compte une vitesse longitudinale du véhicule ;
- une étape de sécurisation de l'affichage d'informations ;
l'étape de sécurisation comprenant une sous-étape d'extinction de l'affichage des informations du module d'affichage et étant déclenchée lorsque le temps restant Tᵢ séparant le véhicule de l'élément d'infrastructure est égal ou sensiblement égal à un temps limite T_{L} prédéterminé séparant le véhicule de l'élément de structure.

Selon l'invention, le procédé comprend une étape d'actualisation du statut de l'élément d'infrastructure comportant au moins une sous-étape d'alerte d'un changement de statut imminent de l'élément d'infrastructure depuis un premier statut vers un deuxième statut par l'intermédiaire d'un signal d'alerte comprenant un signal lumineux et/ou sonore et/ou haptique.

Le procédé peut comprendre au moins une sous-étape de contrôle de la vigilance du conducteur par une unité de surveillance d'un état du conducteur.

Selon une caractéristique optionnelle, la sous-étape de contrôle de la vigilance du conducteur peut comprendre une phase de surveillance d'au moins un paramètre physiologique du conducteur au moyen d'au moins l'unité de surveillance du conducteur et une phase de détection d'un dépassement du paramètre et/ou d'une combinaison de paramètres par une valeur inférieure ou supérieure à une valeur seuil.

Selon une caractéristique optionnelle, l'étape de sécurisation de l'affichage d'informations peut comprendre une sous-étape d'émission d'au moins un message d'alerte à un conducteur du véhicule lorsqu'un dépassement du paramètre et/ou de la combinaison de paramètres est détecté lors de la sous-étape de contrôle, le message d'alerte comprenant un signal lumineux et/ou sonore et/ou haptique. Notamment, le temps limite T_{L} peut être de l'ordre de 2 à 3 secondes. Selon une caractéristique optionnelle, l'étape de détection de l'élément d'infrastructure peut comprendre une sous-étape de sélection de l'élément d'infrastructure parmi une pluralité d'éléments d'infrastructure selon une position de l'élément d'infrastructure relativement à une voie et/ou chaussée parcourue par le véhicule et/ou selon la proximité spatiale et/ou temporelle de l'élément d'infrastructure relativement au véhicule. Selon une caractéristique optionnelle, tout ou partie de l'étape de sécurisation peut être mise en oeuvre seulement lorsque le véhicule évolue à une vitesse supérieure ou égale à 15 km/h.

L'étape d'actualisation du statut de l'élément d'infrastructure peut comprendre, suite à la sous-étape d'alerte, une sous-étape de vérification d'un comportement du conducteur par mesure d'au moins un paramètre physiologique du conducteur au moyen d'au moins une unité de surveillance et, lorsque qu'un dépassement du paramètre et/ou d'une combinaison de paramètres par une valeur inférieure ou supérieure à une valeur seuil est détecté, une sous-étape de rappel du changement de statut de l'élément d'infrastructure et/ou de vigilance.

La présente invention concerne également un système d'assistance à la conduite d'un véhicule automobile comprenant les éléments matériels et/ou logiciels mettant en oeuvre le procédé tel que précédemment exposé, les éléments matériels comportant au moins un moyen de localisation, un moyen de détection d'un élément d'infrastructure connecté, un module de communication, une unité de traitement de données, une unité de surveillance d'un état du conducteur et un module d'affichage du système d'assistance.

L'invention propose, en outre, un produit programme d'ordinateur comprenant des instructions de code de programme enregistrées sur un support lisible par ordinateur pour mettre en oeuvre les étapes du procédé l'invention lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, le programme étant caractérisé en ce en ce qu'il comprend des instructions qui, lorsque le programme est exécuté par l'ordinateur, conduisent celui-ci à mettre en oeuvre le procédé selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
[Fig. 1] La figure 1 représente schématiquement un mode de réalisation d'un véhicule équipé d'un moyen de mise en oeuvre d'un procédé d'affichage sécurisé d'informations dans un véhicule.
[Fig. 2] La figure 2 est un ordinogramme général d'un mode d'exécution du procédé d'affichage sécurisé d'informations.
[Fig. 3] La figure 3 est un ordinogramme détaillant une étape de sécurisation d'un premier mode d'exécution du procédé d'affichage sécurisé d'informations.
[Fig. 4] La figure 4 est un ordinogramme détaillant une étape de sécurisation d'un deuxième mode d'exécution du procédé d'affichage sécurisé d'informations.
[Fig. 5] La figure 5 est un ordinogramme détaillant l'étape de sécurisation d'une première variante d'exécution du procédé d'affichage sécurisé d'informations.
[Fig. 6] La figure 6 est un ordinogramme détaillant une étape de sécurisation d'une deuxième variante d'exécution du procédé d'affichage sécurisé d'informations.
[Fig. 7] La figure 7 est un ordinogramme détaillant une étape de sécurisation d'une troisième variante d'exécution du procédé d'affichage sécurisé d'informations.

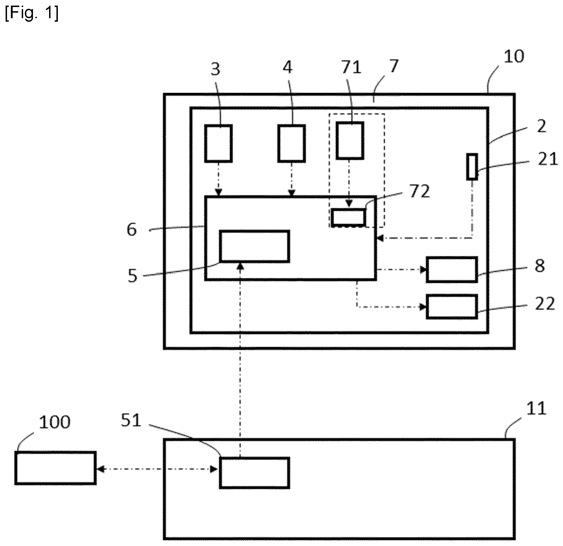

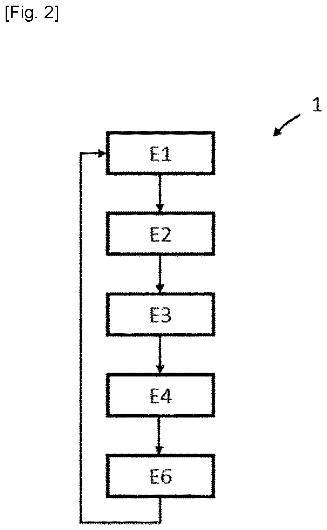

La figure 1 illustre un mode de réalisation d'un véhicule 10 équipé d'un moyen de mise en oeuvre d'un procédé d'affichage sécurisé d'informations 1 dans un véhicule tel que décrit ci-après en référence aux figures 2 à 7. Un tel procédé d'affichage sécurisé 1 est destiné à être intégré à un système d'assistance 2 à la conduite. Par exemple, les systèmes d'assistance considérés peuvent être, de manière préférentielle, un système de consigne d'une vitesse longitudinale optimale du véhicule 10 de type GLOSA (« Green Light Optimal Speed Advice »), ou encore un système de régulation de distance de type ACC contextuel, de l'anglais « Adaptative Cruise Control »,

Le véhicule 10 est un véhicule automobile de n'importe quel type, notamment un véhicule de tourisme ou un véhicule utilitaire. Le véhicule 10 comprend le système d'assistance 2 à la conduite du véhicule automobile qui comporte les éléments matériels et/ou logiciels mettant en oeuvre le procédé selon l'invention. Lesdits éléments matériels comportent au moins un moyen de localisation 3, un moyen de détection 4 d'un élément d'infrastructure 11 connecté, un module de communication 5, une unité de traitement 6 de données, une unité de surveillance 7 d'un état du conducteur et un module d'affichage 8 du système d'assistance 2.

Le moyen de localisation 3 permet la localisation du véhicule 10 dans l'infrastructure routière. Il intègre, par exemple, un système de localisation approximative du véhicule 10 et/ou une cartographie haute définition de l'infrastructure routière. Notamment, la localisation approximative du véhicule 10 peut être fournie par un système de type GPS, de l'acronyme anglais « Global Positioning system ». La localisation approximative du véhicule 10 permet d'extraire d'une base de données de cartographie les informations concernant l'infrastructure routière dans un rayon de quelques centaines de mètres autour de la position approximative du véhicule 10. Alternativement ou en complément, le moyen de localisation 3 peut être un système de localisation embarqué dans le véhicule 10, qui intègre les mouvements du véhicule 10 en permanence.

Le moyen de détection 4 est configuré pour détecter au moins un élément d'infrastructure 11 connecté.

On entend par élément d'infrastructure 11 connecté un élément d'infrastructure apte à être relié à un serveur distant 100 et/ou à échanger des informations avec le véhicule 10. L'élément d'infrastructure 11 peut être mobile ou, de manière préférentielle, fixe.

L'élément d'infrastructure comprend au moins un dispositif de communication 51 configuré pour transmettre et recevoir des données avec le serveur 100 et/ou émettre des données vers le véhicule, notamment de manière périodique. De telles données peuvent comprendre un identifiant de l'élément d'infrastructure 11, un positionnement et/ou un statut actuel de l'élément d'infrastructure 11. Notamment, l'élément d'infrastructure connecté est susceptible de présenter une pluralité de statuts. On entend par « statuts » différents états de l'élément d'infrastructure affectant la circulation des véhicules sur la voie de circulation. A titre d'exemple, l'élément d'infrastructure 11 considéré peut être un feu de signalisation, une barrière de voie ferroviaire ou pont ou tout autre élément de régulation de la circulation d'une infrastructure routière susceptible d'être connecté et de présenter différents statuts. Le statut de tels éléments d'infrastructure 11 est alors relatif à une couleur du feu de signalisation ou à l'état d'ouverture ou de fermeture de la barrière. De manière préférentielle, l'élément d'infrastructure 11 transmet en temps réel les données qui lui sont relatives.

Le moyen de détection 4 du système selon l'invention peut notamment être configuré pour détecter un signal sortant de données émises par l'élément d'infrastructure 11 connecté. Le moyen de détection 4 peut notamment être compris dans le module de communication 5 du système.

De manière optionnelle, le moyen de détection 4 peut, en outre, comprendre une caméra, non représentée, de sorte à optimiser la détection et/ou la sélection de l'élément d'infrastructure 11. Une telle caméra peut être fixée de telle manière qu'elle est en mesure d'acquérir des images d'une portion d'une voie de circulation, sur laquelle évolue le véhicule 10, qui est située à l'avant du véhicule 10. Cette caméra peut ainsi être fixée à l'avant du véhicule 10, par exemple au niveau des phares avant, ou dans l'habitacle, notamment derrière le pare-brise, ou encore sur un toit du véhicule 10. Une telle caméra est apte à fournir des signaux représentatifs d'une image qui peuvent ensuite être transmis à l'unité de traitement 6 en vue de traiter et/ou d'archiver des images. Un tel arrangement permet de fournir à l'unité de traitement 6 un complément d'informations relatives à des éléments d'infrastructure connectés ou non de l'infrastructure routière, par exemple de sorte à optimiser la détection du ou des éléments d'infrastructure pertinents.

Le module de communication 5 permet au véhicule 10 de recevoir les données issues de l'élément d'infrastructure 11 au moyen d'une liaison sans fil, basse fréquence ou haute fréquence. Il peut, par exemple, s'agir d'une liaison sans fil basée sur des technologies « cellulaire» ou « Wifi » par exemple. En l'espèce, lors de la mise en oeuvre du procédé selon l'invention, un tel module de communication 5 n'assure pas la transmission d'informations depuis le véhicule 10 vers l'élément d'infrastructure 11.

L'unité de traitement 6 comprend au moins une unité de calcul comportant des ressources matérielles et logicielles plus précisément au moins un processeur, ou microprocesseur, coopérant avec des éléments de mémoire. Cette unité de calcul est apte à exécuter des instructions pour la mise en oeuvre d'un programme d'ordinateur.

L'unité de surveillance 7 est configurée pour surveiller un état du conducteur et permettre la détection d'un état de baisse de vigilance de celui-ci. Un état de baisse de vigilance s'entend d'un état physique ou physiologique du conducteur qui est susceptible de le perturber voire de le gêner dans le cadre d'une conduite sécuritaire du véhicule 10. Un tel état correspond de manière non limitative et non exhaustive à un état de distraction.

L'unité de surveillance 7 comprend au moins un capteur de surveillance 71 du conducteur, notamment une caméra intérieure au véhicule 10, configuré pour détecter l'état du conducteur. L'au moins un capteur de surveillance 71 peut être aménagé dans l'habitacle du véhicule 10. Un tel au moins un capteur de surveillance 71 du conducteur est notamment apte à mesurer au moins un paramètre physiologique du conducteur parmi la direction du regard, l'orientation ou le mouvement de la tête.

L'unité de surveillance 7 comprend également un module de traitement 72 apte à réaliser les opérations de calcul permettant d'identifier l'état de baisse de vigilance du conducteur. Ainsi, l'unité de surveillance 7 est apte à identifier une modification des conditions comportementales du conducteur et donc du mode de conduite qu'il adopte ou qu'il est susceptible d'adopter. De manière particulière, le module de traitement 72 peut être intégré à l'unité de traitement 6.

Le véhicule 10 comprend un module d'affichage 8 du système d'assistance 2. Le module d'affichage 8 peut comprendre un écran apte à diffuser au moins des informations relatives à des instructions de conduite et/ou une cartographie de localisation du véhicule 10 du système d'assistance à la conduite et/ou du moyen de localisation 3.

En outre, le véhicule 10 peut comprendre, de manière optionnelle mais préférentielle, un organe de détermination d'une vitesse longitudinale du véhicule 10, c'est-à-dire d'une vitesse de déplacement du véhicule 10. Par exemple, l'organe de détermination de la vitesse longitudinale peut comprendre un capteur de vitesse 21.

Egalement, le système peut être configuré de sorte à intégrer un module d'avertissement 22 apte à diffuser une information. Le module d'avertissement 22 peut notamment diffuser un message et/ou un signal sous la forme d'émission :
- sonore, par exemple au moyen d'un haut-parleur, et/ou
- visuelle, par exemple au moyen du module d'affichage 8 de type écran, et/ou
- haptique, par exemple vibratoire, par exemple au moyen d'un élément apte à émettre des vibrations compris dans le siège conducteur ou au niveau d'au moins un élément de commande du véhicule 10, par exemple le volant.

Le système 1 d'assistance à la conduite peut également comprendre une mémoire ou un espace de stockage constituant un support d'enregistrement lisible par un ordinateur ou par le calculateur de l'unité de traitement comprenant des instructions qui, lorsqu'elles sont exécutées par l'ordinateur ou le calculateur, conduisent celui-ci à mettre en oeuvre le procédé tel que décrit ci-après.

Au sein d'un tel système 1 tel qu'illustré à la figure 1, l'unité de traitement 6 est reliée au moyen de détection 4 et au module de communication 5 de sorte à recevoir et traiter les informations relatives à élément d'infrastructure ou aux éléments d'infrastructures 11. En outre, l'unité de traitement 6 est reliée au moyen de localisation 3. L'unité de traitement 6 est également connectée au module d'avertissement 22. Enfin, l'unité de traitement 6 est, directement ou indirectement, reliée aux différents capteurs, par exemple le ou les capteurs de surveillance 71 ou de vitesse 21 de sorte à recevoir les informations portant sur le conducteur ou la vitesse longitudinale du véhicule 10 en temps réel.

Pour l'ensemble de la description ci-après, on suppose que le véhicule 10 automobile circule sur une voie de circulation qui comprend prochainement un élément d'infrastructure 11, en l'espèce un feu de signalisation. Le terme « prochainement » fait référence à un critère de proximité temporel. Il signifie que le temps que mettrait le véhicule 10 pour atteindre l'élément d'infrastructure 11 est inférieur à un seuil donné. Deux modes d'exécution du procédé d'affichage sécurisé d'informations 1 sont décrits ci-après en référence aux figures 2 à 4. Le procédé d'affichage 1 peut également être considéré comme étant un procédé de fonctionnement d'un système d'assistance à la conduite ou comme un procédé de fonctionnement d'un véhicule 10 automobile équipé d'un tel système, le procédé d'affichage 1 permettant notamment de sécuriser l'affichage d'informations lorsqu'un procédé d'assistance à la conduite est mis en oeuvre, c'est-à-dire est en cours d'exécution.

A noter que, lors de l'exécution d'un tel procédé d'affichage 1, le véhicule 10 transmet en temps réel une position du véhicule 10 au sein de l'infrastructure routière par l'intermédiaire du moyen de localisation 3.

Le procédé d'affichage 1 selon l'invention comprend dans un premier temps une étape de détection E1 d'un élément d'infrastructure 11 connecté, notamment un élément d'infrastructure susceptible de changer de statut.

Lors d'une telle étape de détection E1, le moyen de détection 4 détecte un élément d'infrastructure 11 approchant. Selon différentes alternatives, le ou les moyen(s) de détection 4 tel(s) que précédemment exposé capte(nt) un flux de données sortant émis par un dispositif de communication 51, propre à l'élément d'infrastructure 11, notamment vers un serveur et/ou vers le véhicule, et/ou le ou les moyen(s) de détection 4 capture(nt) des images de l'élément d'infrastructure 11. Le moyen de détection 4 transmet ces informations à l'unité de traitement 6 qui, en mettant en oeuvre au moins un algorithme, par exemple d'analyse de la distance relativement à l'élément d'infrastructure 11 et/ou de traitement d'image, détecte ou non l'élément d'infrastructure 11 approchant.

Par exemple, le moyen de détection 4 et/ou le système peut être configuré de sorte à détecter un élément d'infrastructure 11 présentant une proximité spatiale et/ou temporelle relativement au véhicule 10. A titre d'exemple, le moyen de détection 4 et/ou le système peut être configuré de sorte à détecter un élément d'infrastructure 11 présent à une distance de détection D_{d} comprise entre 25 et 500 m et/ou à un temps de détection T_{d}, correspondant à un temps restant au véhicule 10, à sa vitesse longitudinale de roulage actuelle, avant d'atteindre l'élément d'infrastructure 11, compris entre 2 et 60 s. En d'autres termes, le moyen de détection 4 détecte un ou plusieurs élément(s) d'infrastructure présent(s) dans un périmètre spatial et/ou temporel entourant le véhicule 10.

De manière optionnelle mais préférentielle, l'étape de détection E1 peut comprendre une sous-étape de sélection E11 de l'élément d'infrastructure 11 parmi une pluralité d'éléments d'infrastructure. Notamment, une telle sélection peut être réalisée sur la base d'une position de l'élément d'infrastructure 11 relativement à une voie et/ou chaussée parcourue par le véhicule 10 et/ou selon la proximité spatiale et/ou temporelle de l'élément d'infrastructure 11 relativement au véhicule 10.

Par exemple, l'élément d'infrastructure 11 peut être sélectionné parmi la pluralité d'éléments d'infrastructure sur la base de son positionnement sur la voie de circulation parcourue par le véhicule plutôt que sur une voie de circulation transverse et/ou sur la base de son positionnement sur une portion avant de la chaussée, s'étendant au-devant du véhicule 10, plutôt que sur une portion arrière de la chaussée. De manière optionnelle, la sous-étape de sélection E11 peut prendre en compte un trajet préprogrammé dans le moyen de localisation 3.

Une fois l'élément d'infrastructure 11 pertinent détecté, une étape de transmission E2 de données et d'affichage d'informations relatives à des évènements de conduite en fonction desdites données transmises est mise en oeuvre. Dans une telle étape, le dispositif de communication 51 de l'élément d'infrastructure 11 transmet au module de communication 5 du véhicule 10, par exemple compris dans l'unité de traitement 6, les données relatives à l'élément d'infrastructure 11 puis les informations relatives aux évènements de conduites, issues des données transmises, sont affichées sur le module d'affichage 8 du système d'assistance 2 à la conduite.

Notamment, de telles données peuvent comprendre une identification, ou ID, de l'élément d'infrastructure 11, une position exacte de l'élément d'infrastructure 11, un statut de l'élément d'infrastructure 11 et/ou un temps restant avant un changement prochain de statut de l'élément d'infrastructure 11 et/ou une combinaison d'un temps écoulé depuis le dernier changement et d'une période propre à un statut de l'élément d'infrastructure. A titre d'exemple, on entend par « statut » une couleur d'un feu de signalisation, un état « fermé » ou « ouvert » d'une barrière mobile marquant une voie ferrée, un pont ou toute autre voie de circulation.

Selon un exemple de réalisation préférentiel dans lequel l'élément d'infrastructure 11 est un feu de signalisation, les données transmises au véhicule 10 lors de l'étape de recherche et de transmission comprennent au moins un identifiant de l'élément d'infrastructure 11, une position de l'élément d'infrastructure 11, un statut actuel, en temps réel, de l'élément d'infrastructure 11 et/ou un temps restant avant un changement de l'élément d'infrastructure 11 vers un deuxième statut, distinct du statut actuel.

Le procédé met ensuite en oeuvre une étape de localisation E3 du véhicule 10 relativement à l'élément d'infrastructure 11. Cette étape vise à définir la position, en temps réel, du véhicule 10 en déplacement dans l'infrastructure routière et par rapport à l'élément d'infrastructure 11 sur la base des informations de localisation du véhicule 10, transmises en tout temps par le moyen de localisation 3, et des données de positionnement de l'élément d'infrastructure 11 préalablement transmises lors de l'étape E2.

Ces données et informations sont transmises à l'unité de traitement 6 qui, grâce aux données de vitesse longitudinale du véhicule 10, par exemple transmises par les capteurs de vitesse 21, met en oeuvre une étape d'estimation E4, en temps réel, d'une proximité temporelle de l'élément d'infrastructure 11. On entend par « proximité temporelle », un temps restant Tᵢ au véhicule 10 pour atteindre l'élément d'infrastructure 11 pour une vitesse longitudinale détectée.

En d'autres termes, lors de l'exécution du procédé selon l'invention, le système réalise, en temps réel, d'une part l'étape d'estimation E4 du temps restant Tᵢ au véhicule 10 pour atteindre l'élément d'infrastructure 11 et d'autre part une étape de comparaison E41 d'un tel temps restant Tᵢ avec un temps limite T_{L} de référence.

Le procédé est également configuré pour mettre en oeuvre une étape de sécurisation E6 de l'affichage d'informations. Il est à noter que, dans les différentes figures, l'étape d'estimation E4 est représentée comme précédant l'étape de sécurisation E6, néanmoins, l'actualisation du temps restant Tᵢ peut se poursuivre parallèlement à la mise en oeuvre de l'étape de sécurisation E6.

L'étape de sécurisation est déclenchée lorsque le temps restant Tᵢ séparant le véhicule 10 de l'élément d'infrastructure 11 est égal ou sensiblement égal au temps limite T_{L} prédéterminé, séparant le véhicule 10 de l'élément de structure. Le temps limite T_{L} est un temps optimal restant avant d'atteindre l'élément d'infrastructure 11 qui permet d'assurer que le conducteur puisse réagir de manière appropriée en réponse à la mise en oeuvre de l'étape de sécurisation et avant d'atteindre l'élément d'infrastructure 11.

Selon un mode de réalisation préférentiel, un tel temps limite est de l'ordre de 2 à 3 s. L'étape de sécurisation E6 peut ainsi être mise en oeuvre pendant tout ou partie d'une période de temps comprise entre un temps restant Tᵢ égal au temps limite T_{L} et un temps restant Tᵢ nul correspondant à un positionnement du véhicule au droit de l'élément d'infrastructure.

L'initiation de l'étape de sécurisation E6 sur la base de la proximité temporelle de l'élément d'infrastructure, dépendant de la vitesse longitudinale du véhicule 10, en lieu d'une proximité spatiale prédéterminée permet avantageusement de rendre le procédé 1 adapté à des conditions de circulation variables, notamment à des densités de circulation variable. Aussi, le procédé selon l'invention ne requiert pas l'intégration d'étapes de détection de paramètres additionnels relatifs au trafic tels que la présence de véhicules, circulants ou à l'arrêt, sur la chaussée ou à proximité de l'élément d'infrastructure 11. Avantageusement, la définition d'un temps limite prédéterminé fixe, c'est-à-dire constant et non variable, contribue à l'habituation du conducteur au système de sécurisation selon l'invention au fil de son utilisation. De la sorte, le comportement du conducteur s'adapte au fonctionnement du procédé et anticipe progressivement la mise en oeuvre de l'étape de sécurisation E6 à l'approche de l'élément d'infrastructure 11, renforçant ainsi sa vigilance à force d'habitude.

L'étape de sécurisation E6 comprend une sous-étape d'extinction E62 de l'affichage des informations du module d'affichage 8 du système d'assistance 2 à la conduite. Autrement dit, l'unité de traitement 6 contrôle l'extinction du module d'affichage 8, notamment d'au moins les informations relatives à des évènements de conduite.

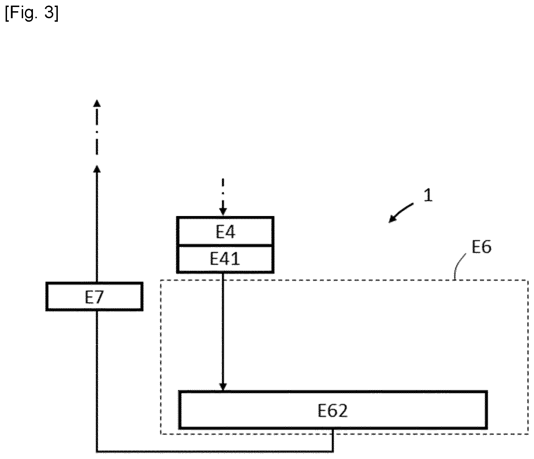

Notamment, selon le premier mode d'exécution illustré à la figure 3, la sous-étape d'extinction E62 peut ainsi être mise en oeuvre lorsque le temps restant Tᵢ séparant le véhicule 10 de l'élément d'infrastructure 11 est égal ou sensiblement égal au temps limite T_{L} prédéterminé, séparant le véhicule 10 de l'élément de structure.

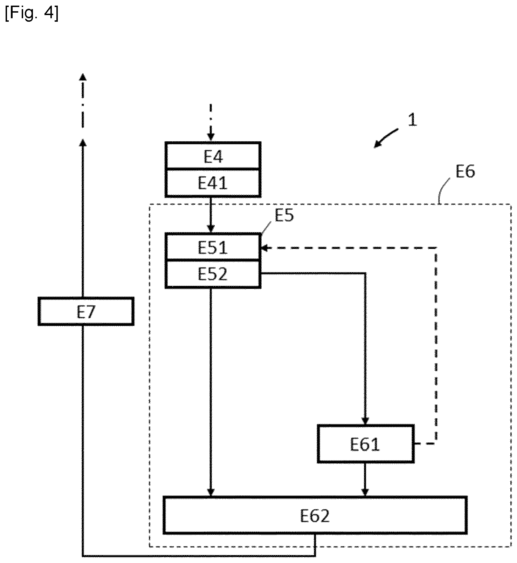

Selon un deuxième mode d'exécution du procédé, illustré à la figure 4, l'étape de sécurisation E6 peut, de manière optionnelle, comprendre une sous-étape de contrôle E5 de la vigilance du conducteur par l'unité de surveillance 7 d'un état du conducteur. Notamment, une telle sous-étape de contrôle E5 peut, de manière préférentielle, être mise en oeuvre préalablement à la sous-étape d'extinction E62.

Ainsi, par exemple, lorsque le temps restant Tᵢ est égal, ou sensiblement égal, au temps limite T_{L}, le système initie la sous-étape de contrôle E5. Si à l'inverse, le temps restant Tᵢ est supérieur au temps limite T_{L} alors le procédé répète l'étape d'estimation E4, en temps réel, du temps restant Tᵢ de sorte à permettre son actualisation en fonction du déplacement et de la position du véhicule 10.

La sous-étape de contrôle E5 de la vigilance du conducteur peut comprendre une phase de surveillance E51 d'au moins un paramètre physiologique du conducteur au moyen d'au moins l'unité de surveillance 7 telle que précédemment exposée. Chaque paramètre est détecté et/ou mesuré par un ou des capteurs de surveillance 71 du conducteur, compris dans l'unité de surveillance 7, qui sont reliés au module de traitement 72, par exemple compris dans l'unité de traitement 6. A titre d'exemple, l'unité de surveillance 7 du véhicule 10 peut capturer des images du conducteur, notamment du regard du conducteur qui sont ensuite transmises à l'unité de traitement 6, laquelle est équipée d'au moins un algorithme d'analyse d'image.

La sous-étape de contrôle E5 peut ensuite comprendre une phase de détection E52 d'un dépassement du paramètre et/ou d'une combinaison de paramètres par une valeur inférieure ou supérieure à une valeur seuil, par l'unité de traitement 6. En d'autres termes, l'unité de traitement 6 est apte à réaliser des opérations de calcul et de comparaison propre à déterminer si le(s) paramètre(s) fourni(s) par le ou les capteurs dépasse(nt), par une valeur supérieure ou inférieure, au moins un seuil donné et ainsi permettre l'identification, le cas échéant, d'un état de baisse de vigilance du conducteur.

Dans un tel mode d'exécution, l'étape de sécurisation E6 peut, en outre, comprendre une ou plusieurs sous-étapes susceptible(s) d'être mise(s) en oeuvre de manière conditionnelle selon le résultat de la sous-étape de contrôle E5 de l'état de vigilance du conducteur et/ou selon un ou des mode(s) de fonctionnement mis en oeuvre par le procédé d'affichage 1 et/ou le système.

Notamment, selon un exemple de mode de fonctionnement, l'étape de sécurisation E6 de l'affichage d'informations peut comprendre une sous-étape d'émission E61 d'au moins un message d'alerte au conducteur du véhicule 10 lorsqu'un dépassement du paramètre et/ou de la combinaison de paramètres est détecté lors de la sous-étape de contrôle E5.

Pour ce faire, l'unité de traitement 6 génère un message d'alerte qui est transmis au module d'avertissement 22 prévu pour diffuser des informations comprises dans ce message au conducteur afin de rediriger son attention vers la voie de circulation. Ce message d'alerte peut, tel que précédemment exposé, comprendre un signal lumineux, par exemple affiché sur le module d'affichage 8 du système d'assistance 2, et/ou sonore, par exemple transmis par l'intermédiaire d'un haut-parleur, et/ou haptique, pouvant notamment être mis en oeuvre par le siège du conducteur et/ou le volant, tel que précédemment exposé.

De manière particulière, la sous-étape d'extinction E62 de l'affichage des informations du module d'affichage 8, notamment relatives à des évènements de conduite, du système d'assistance 2 à la conduite peut être conditionnée par la sous-étape de contrôle E5.

Notamment, sur la base des informations transmises par l'unité de surveillance 7, l'unité de traitement 6 peut ainsi directement mettre en oeuvre l'extinction du module d'affichage 8 lorsque le temps restant Tᵢ est égal ou sensiblement égal au temps limite T_{L} et qu'aucun dépassement du paramètre et/ou de la combinaison de paramètres n'est détecté lors de la sous-étape de contrôle E5.

A l'inverse, lorsque le temps restant Tᵢ est égal au temps limite T_{L} et qu'un dépassement du paramètre et/ou de la combinaison de paramètres est détecté lors de la sous-étape de contrôle E5, l'unité de traitement 6 peut exécuter la sous-étape E61 et ordonner l'émission d'un message par le module d'avertissement 22. L'unité de traitement 6 peut ensuite exécuter la sous-étape E62 et contrôler l'extinction du module d'affichage 8 directement suite à la sous-étape d'émission E61.

De manière alternative, représentée dans les différentes figures par une flèche grasse pointillée, l'unité de traitement 6 peut exécuter la sous-étape E62 lorsqu'elle ne détecte plus un dépassement du paramètre et/ou de la combinaison de paramètres. Autrement dit, la sous-étape de contrôle E5 peut alors être répétée suite à la sous-étape d'alerte E61 afin d'actualiser, en temps réel, une mesure de l'état de vigilance du conducteur et mettre en oeuvre la sous-étape d'extinction E62 seulement lorsque le paramètre et/ou la combinaison de paramètres présente(nt) une valeur acceptable.

A titre d'exemple, la sous-étape d'extinction E62 est mise en oeuvre lorsque le système détecte que le regard, et donc l'attention, du conducteur est porté sur la voie de circulation et non le module d'affichage 8.

Un tel arrangement prévient une éventuelle distraction du conducteur par le module d'affichage 8 pendant une période la plus critique, en l'espèce à l'approche de l'élément d'infrastructure 11, et permet de diriger l'attention du conducteur vers la voie de circulation.

Il est à noter que, si l'affichage des informations et/ou données relatives à l'élément d'infrastructure 11 est interrompu, ce n'est pas le cas de la transmission de données relatives à l'élément d'infrastructure 11 depuis le module de communication 5 fixe dudit élément d'infrastructure 11 vers le module de communication 5 du véhicule 10. Autrement dit, le procédé selon l'invention peut assurer les étapes de transmission E2, localisation E3 et estimation E4 même à l'approche immédiate de l'élément d'infrastructure 11, c'est-à-dire même lorsque le temps restant Tᵢ est inférieur au temps limite T_{L} afin d'assurer l'actualisation des données de position du véhicule 10 et de temps restant Tᵢ en temps réel.

Indépendamment du mode d'exécution, le procédé peut, en outre, comprendre une étape de rallumage E7 du module d'affichage 8 pouvant être mise en oeuvre selon différentes alternatives :
- le module d'affichage 8 peut être à nouveau allumé lorsque le temps restant Tᵢ au véhicule 10 pour atteindre l'élément d'infrastructure 11 est nul, c'est-à-dire lorsque le véhicule 10 est au droit dudit élément d'infrastructure 11 ; ou
- le module d'affichage 8 peut être à nouveau allumé lorsque le module de localisation du véhicule 10 transmet une position du véhicule 10 indiquant que la position de l'élément d'infrastructure 11 a été dépassée ; ou
- le module d'affichage 8 peut être à nouveau allumé lorsque un autre élément d'infrastructure 11 est détecté, c'est-à-dire simultanément à l'étape de détection E1 d'un nouveau cycle du procédé.

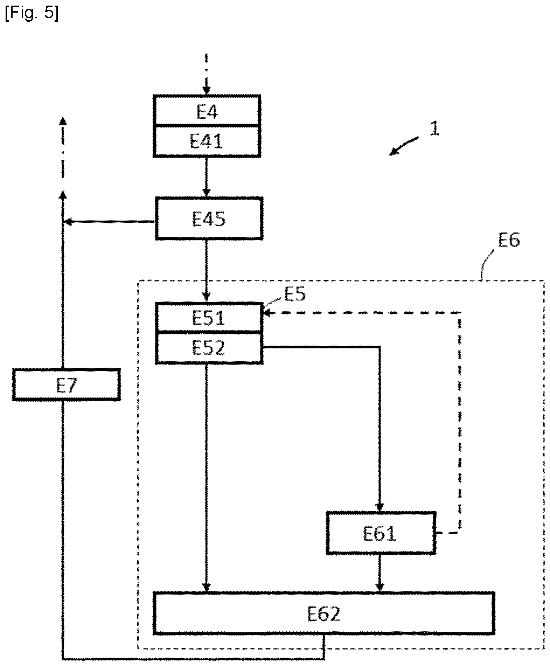

Les figures 5 à 7 illustrent différentes variantes d'exécution du procédé selon l'invention, de telles variantes étant notamment intégrées au deuxième mode d'exécution tel qu'exposé ci-dessus. Il est néanmoins entendu que chacune desdites variantes peut également être intégrée *mutatis mutandis* au premier mode d'exécution tel que précédemment décrit en référence à la figure 3.

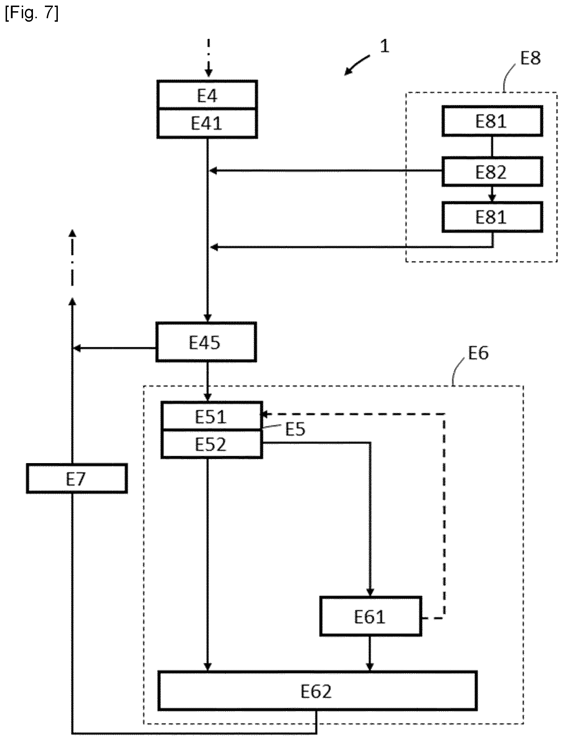

De manière avantageuse, tel qu'illustré aux figures 5 et 7, tout ou partie de l'étape de sécurisation E6 peut être mise en oeuvre seulement lorsque le véhicule 10 évolue à une vitesse supérieure ou égale à 15 km/h. En d'autres termes, le procédé comprend une étape, optionnelle, d'évaluation et de comparaison E45 de la vitesse longitudinale du véhicule à une valeur seuil prédéterminée, en l'espèce 15km/h.

A titre d'exemple, la sous-étape d'émission E61 peut être mise en oeuvre seulement lorsque le véhicule 10 évolue à une vitesse supérieure ou égale à 15 km/h.

De manière optionnelle mais préférentielle, la sous-étape d'extinction E62 est mise en oeuvre seulement lorsque le véhicule 10 évolue à une vitesse supérieure ou égale à 15 km/h. Ainsi, le module d'affichage 8 peut demeurer opérant lorsque le véhicule 10 est à l'arrêt ou évolue à une faible vitesse longitudinale

Dans l'exemple illustré, une telle étape d'évaluation et de comparaison E45 est illustrée, à des fins de clarté, comme précédant l'étape de sécurisation E6. Notamment, l'étape de comparaison E45 peut être réalisée préalablement à la sous-étape de contrôle E5 de sorte que, si le véhicule évolue à une vitesse inférieure à 15km/h, la sous-étape d'extinction 62, la sous-étape d'émission E61 et l'étape de rallumage E7 ne sont pas mises en oeuvre. Il est néanmoins entendu qu'une telle étape d'évaluation et de comparaison E45 peut être réalisée simultanément à la sous-étape de contrôle E5, c'est-à-dire qu'elle est mise en oeuvre lorsque le temps restant Tᵢ séparant le véhicule 10 de l'élément d'infrastructure 11 est égal ou sensiblement égal au temps limite T_{L} prédéterminé.

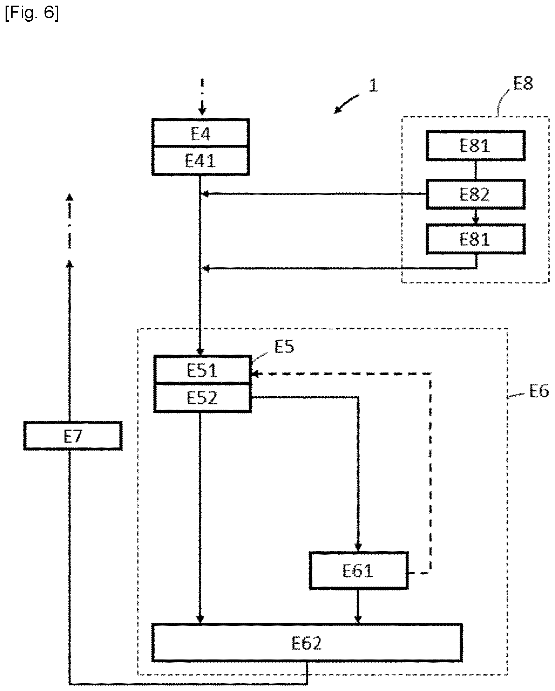

De manière optionnelle, illustrée aux figures 6 et 7, le procédé peut comprendre une étape d'actualisation E8, en temps réel, du statut de l'élément d'infrastructure 11.

Notamment une telle étape d'actualisation E8 peut être réalisée simultanément à l'étape de localisation E3 et/ou à l'étape d'estimation E4 et/ou à l'étape de sécurisation E6.

Dans l'exemple illustré, l'étape d'actualisation E8 est représentée simultanément à l'étape d'estimation E4, il est néanmoins entendu qu'une telle représentation n'est en rien limitative et que l'étape d'actualisation E8 peut être mise en oeuvre à tout moment suite à l'étape de transmission E2, c'est-à-dire entre l'étape de transmission E2 et le passage du véhicule au droit de l'élément d'infrastructure.

Notamment, l'étape d'actualisation E8 comprend une sous-étape d'alerte E81 d'un changement de statut imminent de l'élément d'infrastructure 11 par l'intermédiaire d'un signal d'alerte comprenant un signal lumineux et/ou sonore et/ou haptique diffusé par le module d'avertissement 22. On entend par exemple par changement de statut le passage d'un premier statut à un deuxième statut tel que précédemment exposé. Pour un feu de signalisation, on qualifiera, à titre d'exemple, de « premier statut » un feu vert, et de deuxième statut un feu d'arrêt, par exemple orange ou rouge. Par « imminent », on entend qu'un temps restant Tₛ au statut actuel de l'élément d'infrastructure, à savoir le premier statut, est égal ou sensiblement égal à un temps seuil T_{LS} prédéterminé auquel la sous-étape d'alerte est mise en oeuvre. A titre d'exemple, un tel temps seuil T_{LS} peut être de l'ordre de 3 s avant un changement de statut de l'élément d'infrastructure.

En d'autres termes, la sous-étape d'alerte E81 comprend, préalablement à l'émission d'un signal d'alerte, une phase de réception de données actualisées relatives à l'élément d'infrastructure et une phase de comparaison du temps restant Tₛ au statut actuel avec le temps seuil T_{LS}, non illustrées. En outre, selon le type de données transmises par l'élément d'infrastructure, la phase de réception de données actualisées peut être suivie d'une phase de calcul du temps restant Tₛ au statut actuel.

De manière optionnelle mais préférentielle, l'étape d'actualisation E8 du statut de l'élément d'infrastructure peut comprendre, suite à la sous-étape d'alerte E81, une sous-étape de vérification E82 d'un comportement du conducteur, notamment de sa prise en compte d'un changement imminent du statut de l'élément d'infrastructure et/ou de sa vigilance. Une telle sous-étape de vérification E82 est similaire à la sous-étape de contrôle E5 telle que précédemment détaillée, aussi, l'ensemble de la description relative à cette étape s'applique-t-elle *mutatis mutandis* à l'étape de vérification E82.

L'étape de vérification E82 comprend une phase de surveillance, non illustrée, d'au moins un paramètre physiologique du conducteur au moyen d'au moins l'unité de surveillance 7 ainsi qu'une phase de détection, par l'unité de traitement 6, d'un dépassement du paramètre et/ou d'une combinaison de paramètres par une valeur inférieure ou supérieure à une valeur seuil.

L'étape d'actualisation E8 peut, de manière optionnelle, comprendre une sous-étape de rappel E83 du changement de statut de l'élément d'infrastructure et/ou de vigilance afin d'assurer que l'information a bien été prise en compte par le conducteur et/ou que l'attention du conducteur est bien dirigée sur la voie de circulation. Une telle sous-étape de rappel est notamment exécutée lorsqu'un dépassement du paramètre et/ou de la combinaison de paramètres est détecté et contribue à renforcer la sécurisation de la conduite du conducteur.

Par ailleurs, l'invention porte sur un programme d'ordinateur comprenant des instructions de code de programme pour l'exécution des étapes de ce procédé lorsque ledit programme est exécuté par un ordinateur, par exemple l'unité de traitement 6, ou produit programme d'ordinateur téléchargeable depuis un réseau de communication et/ou enregistré sur un support de données lisible par un ordinateur et/ou exécutable par un ordinateur.

L'invention porte également sur un support d'enregistrement de données, lisible par un ordinateur, sur lequel est enregistré un programme d'ordinateur comprenant des instructions de code de programme de mise en oeuvre du procédé tel que précédemment exposé ou un support d'enregistrement lisible par ordinateur comprenant des instructions qui, lorsqu'elles sont exécutées par un ordinateur, conduisent celui-ci à mettre en oeuvre le procédé selon l'invention.

La présente invention propose ainsi un procédé d'affichage sécurisé d'informations dans un véhicule équipé d'un système d'assistance à la conduite permettant la détection d'un élément d'infrastructure connecté, susceptible de présenter une pluralité de statuts, et l'estimation d'une proximité temporelle avec ledit élément d'infrastructure, le procédé mettant en oeuvre la sécurisation de l'affichage d'informations relatives à des évènements de conduite affichés sur un module d'affichage du système. Le procédé permet ainsi de concentrer l'attention du conducteur sur les voies de circulation et le trafic, sécurisant de ce fait sa conduite.

La présente invention ne saurait toutefois se limiter aux moyens et configurations décrits et illustrés ici. Plutôt, la portée de l'invention est définie par les revendications annexées.

## Revendications

1. Procédé d'affichage sécurisé d'informations (1) dans un véhicule (10) équipé d'un système d'assistance à la conduite, le procédé comprenant les étapes suivantes :
- une étape de détection (E1) d'un élément d'infrastructure (11), notamment un feu de signalisation connecté, susceptible de présenter une pluralité de statuts ;
- une étape de transmission (E2) de données, relatives à l'élément d'infrastructure (11), au véhicule (10) et d'affichage d'informations relatives à des évènements de conduite sur un module d'affichage (8) d'un système d'assistance (2) à la conduite en fonction desdites données transmises ;
- une étape de localisation (E3) du véhicule (10) relativement à l'élément d'infrastructure (11) ;
- une étape d'estimation (E4), en temps réel, d'un temps restant (Tᵢ) au véhicule (10) pour atteindre l'élément d'infrastructure (11) prenant en compte une vitesse longitudinale du véhicule (10) ;
- une étape de sécurisation (E6) de l'affichage d'informations
l'étape de sécurisation (E6) comprenant une sous-étape d'extinction (E62) de l'affichage des informations du module d'affichage (8) et étant déclenchée lorsque le temps restant (Tᵢ) séparant le véhicule (10) de l'élément d'infrastructure (11) est égal ou sensiblement égal à un temps limite (T_{L}) prédéterminé séparant le véhicule (10) de l'élément de structure ;
**caractérisé en ce que** le procédé comprend une étape d'actualisation (E8) du statut de l'élément d'infrastructure (11) comportant au moins une sous-étape d'alerte (E81) d'un changement de statut imminent de l'élément d'infrastructure (11) depuis un premier statut vers un deuxième statut par l'intermédiaire d'un signal d'alerte comprenant un signal lumineux et/ou sonore et/ou haptique.

2. Procédé selon la revendication précédente, dans lequel l'étape de sécurisation (E6) comprend au moins une sous-étape de contrôle (E5) de la vigilance du conducteur par une unité de surveillance (7) d'un état du conducteur.

3. Procédé selon la revendication précédente, dans lequel la sous-étape de contrôle (E5) de la vigilance du conducteur comprend une phase de surveillance (E51) d'au moins un paramètre physiologique du conducteur au moyen d'au moins l'unité de surveillance (7) du conducteur et une phase de détection (E52) d'un dépassement du paramètre et/ou d'une combinaison de paramètres par une valeur inférieure ou supérieure à une valeur seuil.

4. Procédé selon la revendication précédente, dans lequel l'étape de sécurisation (E6) de l'affichage d'informations comprend une sous-étape d'émission (E61) d'au moins un message d'alerte à un conducteur du véhicule (10) lorsqu'un dépassement du paramètre et/ou de la combinaison de paramètres est détecté lors de la sous-étape de contrôle (E5), le message d'alerte comprenant un signal lumineux et/ou sonore et/ou haptique.

5. Procédé selon l'une quelconque des revendications précédentes, dans lequel le temps limite (T_{L}) est de l'ordre de 2 à 3 secondes.

6. Procédé selon l'une des revendications précédentes, dans lequel l'étape de détection (E1) de l'élément d'infrastructure (11) comprend une sous-étape de sélection (E11) de l'élément d'infrastructure (11) parmi une pluralité d'éléments d'infrastructure selon une position de l'élément d'infrastructure (11) relativement à une voie et/ou chaussée parcourue par le véhicule (10) et/ou selon la proximité spatiale et/ou temporelle de l'élément d'infrastructure (11) relativement au véhicule (10).

7. Procédé selon l'une des revendications précédentes, dans lequel tout ou partie de l'étape de sécurisation (E6) est mise en oeuvre seulement lorsque le véhicule (10) évolue à une vitesse supérieure ou égale à 15 km/h.

8. Procédé selon l'une des revendications précédentes, dans lequel l'étape d'actualisation (E8) du statut de l'élément d'infrastructure comprend, suite à la sous-étape d'alerte (E81), une sous-étape de vérification (E82) d'un comportement du conducteur par mesure d'au moins un paramètre physiologique du conducteur au moyen d'au moins une unité de surveillance (7) et, lorsque qu'un dépassement du paramètre et/ou d'une combinaison de paramètres par une valeur inférieure ou supérieure à une valeur seuil est détecté, une sous-étape de rappel (E83) du changement de statut de l'élément d'infrastructure et/ou de vigilance.

9. Système d'assistance (2) à la conduite d'un véhicule (10) automobile comprenant les éléments matériels et/ou logiciels mettant en oeuvre le procédé selon l'une des revendications précédentes, les éléments matériels comportant au moins un moyen de localisation (3), un moyen de détection (4) d'un élément d'infrastructure (11) connecté, un module de communication (5), une unité de traitement (6) de données, une unité de surveillance (7) d'un état du conducteur et un module d'affichage (8) du système d'assistance (2).

10. Produit programme d'ordinateur comprenant des instructions de code de programme enregistrées sur un support lisible par ordinateur pour mettre en oeuvre les étapes du procédé selon l'une quelconque des revendications 1 à 8 lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en oeuvre le procédé selon l'une quelconque des revendications 1 à 8.

## Patentansprüche

1. Verfahren zur sicheren Anzeige von Informationen (1) in einem Fahrzeug (10), das mit einem Fahrassistenzsystem ausgestattet ist, wobei das Verfahren die folgenden Schritte umfasst:
- einen Schritt des Detektierens (E1) eines Infrastrukturelements (11), insbesondere einer verbundenen Ampel, das eine Mehrzahl von Status aufweisen kann;
- einen Schritt des Übertragens (E2) von Daten in Bezug auf das Infrastrukturelement (11) an das Fahrzeug (10) und des Anzeigens von Informationen in Bezug auf Fahrereignisse auf einem Anzeigemodul (8) eines Fahrassistenzsystems (2) in Abhängigkeit von den übertragenen Daten;
- einen Schritt des Lokalisierens (E3) des Fahrzeugs (10) relativ zu dem Infrastrukturelement (11);
- einen Schritt des Schätzens (E4), in Echtzeit, einer dem Fahrzeug (10) verbleibenden Zeit (Tᵢ), um das Infrastrukturelement (11) zu erreichen, unter Berücksichtigung einer Längsgeschwindigkeit des Fahrzeugs (10);
- einen Schritt des Sicherns (E6) der Anzeige von Informationen, wobei der Schritt des Sicherns (E6) einen Unterschritt des Löschens (E62) der Anzeige der Informationen des Anzeigemoduls (8) umfasst und dann ausgelöst wird, wenn die verbleibende Zeit (Tᵢ), die das Fahrzeug (10) von dem Infrastrukturelement (11) trennt, gleich oder im Wesentlichen gleich einem vorbestimmten Zeitlimit (T_{L}) ist, das das Fahrzeug (10) von dem Strukturelement trennt;
**dadurch gekennzeichnet, dass** das Verfahren einen Schritt des Aktualisierens (E8) des Status des Infrastrukturelements (11) umfasst, der wenigstens einen Unterschritt des Warnens (E81) über eine bevorstehende Statusänderung des Infrastrukturelements (11) von einem ersten Status zu einem zweiten Status mittels eines Warnsignals beinhaltet, das ein Licht- und/oder Tonsignal und/oder ein haptisches Signal umfasst.

2. Verfahren nach dem vorhergehenden Anspruch, wobei der Schritt des Sicherns (E6) wenigstens einen Unterschritt des Kontrollierens (E5) der Wachsamkeit des Fahrers durch eine Einheit zur Überwachung (7) eines Zustands des Fahrers umfasst.

3. Verfahren nach dem vorhergehenden Anspruch, wobei der Unterschritt des Kontrollierens (E5) der Wachsamkeit des Fahrers eine Phase des Überwachens (E51) wenigstens eines physiologischen Parameters des Fahrers mittels wenigstens der Einheit zur Überwachung (7) des Fahrers und eine Phase des Detektierens (E52) einer Überschreitung des Parameters und/oder einer Kombination von Parametern durch einen Wert unter oder über einem Schwellenwert umfasst.

4. Verfahren nach dem vorhergehenden Anspruch, wobei der Schritt des Sicherns (E6) der Anzeige von Informationen einen Unterschritt des Sendens (E61) wenigstens einer Warnmeldung an einen Fahrer des Fahrzeugs (10), wenn eine Überschreitung des Parameters und/oder der Kombination von Parametern beim Unterschritt des Kontrollierens (E5) detektiert wird, umfasst, wobei die Warnmeldung ein Licht- und/oder Tonsignal und/oder ein haptisches Signal umfasst.

5. Verfahren nach einem der vorhergehenden Ansprüche, wobei das Zeitlimit (T_{L}) in der Größenordnung von 2 bis 3 Sekunden liegt.

6. Verfahren nach einem der vorhergehenden Ansprüche, wobei der Schritt des Detektierens (E1) des Infrastrukturelements (11) einen Unterschritt des Auswählens (E11) des Infrastrukturelements (11) aus einer Mehrzahl von Infrastrukturelementen je nach einer Position des Infrastrukturelements (11) relativ zu einer Fahrspur und/oder Fahrbahn, die vom Fahrzeug (10) befahren wird, und/oder je nach der räumlichen und/oder zeitlichen Nähe des Infrastrukturelements (11) relativ zum Fahrzeug (10) umfasst.

7. Verfahren nach einem der vorhergehenden Ansprüche, wobei der gesamte oder ein Teil des Schritts des Sicherns (E6) nur dann durchgeführt wird, wenn sich das Fahrzeug (10) mit einer Geschwindigkeit größer als oder gleich 15 km/h fortbewegt.

8. Verfahren nach einem der vorhergehenden Ansprüche, wobei der Schritt des Aktualisierens (E8) des Status des Infrastrukturelements nach dem Unterschritt des Warnens (E81) einen Unterschritt des Überprüfens (E82) eines Verhaltens des Fahrers durch Messung wenigstens eines physiologischen Parameters des Fahrers mittels wenigstens einer Überwachungseinheit (7), und, wenn eine Überschreitung des Parameters und/oder einer Kombination von Parametern durch einen Wert unter oder über einem Schwellenwert detektiert wird, einen Unterschritt des Erinnerns (E83) an die Statusänderung des Infrastrukturelements und/oder Wachsamkeit umfasst.

9. Fahrassistenzsystem (2) eines Kraftfahrzeugs (10), das die Hard- und/oder Softwareelemente umfasst, die das Verfahren nach einem der vorhergehenden Ansprüche durchführen, wobei die Hardwareelemente wenigstens ein Lokalisierungsmittel (3), ein Mittel zur Detektion (4) eines verbundenen Infrastrukturelements (11), ein Kommunikationsmodul (5), eine Datenverarbeitungseinheit (6), eine Einheit zur Überwachung (7) eines Zustands des Fahrers und ein Anzeigemodul (8) des Assistenzsystems (2) beinhalten.

10. Computerprogrammprodukt umfassend Programmcode-Anweisungen, die auf einem computerlesbaren Datenträger gespeichert sind, zur Durchführung der Schritte des Verfahrens nach einem der Ansprüche 1 bis 8, wenn das Programm auf einem Computer läuft, oder Computerprogrammprodukt, das aus einem Kommunikationsnetz herunterladbar ist und/oder auf einem computerlesbaren Datenträger gespeichert ist und/oder von einem Computer ausgeführt werden kann, **dadurch gekennzeichnet, dass** es Anweisungen umfasst, die bei Ausführung des Programms durch den Computer diesen dazu veranlassen, das Verfahren nach einem der Ansprüche 1 bis 8 durchzuführen.

## Claims

1. Method for the secure display of information (1) in a vehicle (10) fitted with a driving assistance system, the method comprising the following steps:
- a step of detection (E1) of an infrastructure element (11), notably a connected traffic light, likely to have a plurality of statuses;
- a step of transmission (E2) of data, relating to the infrastructure element (11), to the vehicle (10) and of displaying information relating to driving events on a display module (8) of a driving assistance system (2) as a function of said transmitted data;
- a step of location (E3) of the vehicle (10) relative to the infrastructure element (11);
- a step of estimation (E4), in real time, of a time remaining (Tᵢ) for the vehicle (10) to reach the infrastructure element (11) taking into account a longitudinal speed of the vehicle (10);
- a step of securing (E6) of the display of information,
the securing step (E6) comprising a sub step of switching off (E62) of the display of information on the display module (8) and being triggered when the remaining time (Tᵢ) separating the vehicle (10) from the infrastructure element (11) is equal or substantially equal to a predetermined limit time (T_{L}) separating the vehicle (10) from the structure element;
**characterized in that** the method comprises a step of updating (E8) of the status of the infrastructure element (11) comprising at least one sub step of alerting (E81) of an imminent change of status of the infrastructure element (11) from a first status to a second status via an alert signal comprising a light and/or sound and/or haptic signal.

2. Method according to the preceding claim, wherein the securing step (E6) comprises at least one sub step of checking (E5) of the alertness of the driver by a driver state monitoring unit (7).

3. Method according to the preceding claim, wherein the sub step of checking (E5) of the alertness of the driver comprises a phase of monitoring (E51) of at least one physiological parameter of the driver by means of at least the driver monitoring unit (7) and a phase of detection (E52) of an overshoot of the parameter and/or of a combination of parameters by a value less than or greater than a threshold value.

4. Method according to the preceding claim, wherein the step of securing (E6) of the display of information comprises a sub step of issuing (E61) of at least one alert message to a driver of the vehicle (10) when an overshoot of the parameter and/or of the combination of parameters is detected in the checking sub step (E5), the alert message comprising a light and/or sound and/or haptic signal.

5. Method according to any one of the preceding claims, wherein the limit time (T_{L}) is of the order of 2 to 3 seconds.

6. Method according to one of the preceding claims, wherein the step of detection (E1) of the infrastructure element (11) comprises a sub step of selection (E11) of the infrastructure element (11) from among a plurality of infrastructure elements according to a position of the infrastructure element (11) relative to a lane and/or roadway travelled by the vehicle (10) and/or according to the spatial and/or temporal proximity of the infrastructure element (11) relative to the vehicle (10).

7. Method according to one of the preceding claims, wherein all or part of the securing step (E6) is implemented only when the vehicle (10) is moving at a speed greater than or equal to 15 km/h.

8. Method according to one of the preceding claims, wherein the step of updating (E8) of the status of the infrastructure element comprises, following the alerting sub step (E81), a sub step of verification (E82) of a behaviour of the driver by the measurement of at least one physiological parameter of the driver by means of at least one monitoring unit (7) and, when an overshoot of the parameter and/or of a combination of parameters by a value less than or equal to a threshold value is detected, a sub step of reminding (E83) of the change of status of the infrastructure element and/or of alertness.

9. Motor vehicle (10) driving assistance system (2) comprising hardware and/or software elements implementing the method according to one of the preceding claims, the hardware elements comprising at least a location means (3), a means (4) for detecting a connected infrastructure element (11), a communication module (5), a data processing unit (6), a driver state monitoring unit (7) and a display module (8) of the assistance system (2) .

10. Computer program product comprising program code instructions stored on a computer-readable medium for implementing the steps of the method according to any one of Claims 1 to 8 when said program runs on a computer or computer program product that can be downloaded from a communication network and/or stored on a computer-readable data medium and/or that can be executed by a computer, **characterized in that** it comprises instructions which, when the program is run by the computer, cause the latter to implement the method according to any one of Claims 1 to 8.
